# EUROPÄISCHE PATENTSCHRIFT

(11) **EP 3 828 031 B1**
(45) Veröffentlichungstag und Bekanntmachung des Hinweises auf die Patenterteilung: **30.08.2023**
(21) Anmeldenummer: 20182594.0
(22) Anmeldetag: 19.06.2020
(51) Int. Cl.: B60P 3/32, B62D 21/00, B62D 33/04, B62D 21/15

(54) **FREIZEITFAHRZEUG MIT WOHNAUFBAU**
LEISURE VEHICLE WITH RESIDENCE MODULE
VÉHICULE DE LOISIR POURVU DE CELLULE

(30) Priorität: 19.06.2019 DE 102019116697
(43) Veröffentlichungstag der Anmeldung: 02.06.2021
(73) Patentinhaber: Erwin Hymer Group SE, 88339 Bad Waldsee (DE)
(72) Erfinder: Kaiser, Ria, 21077 Hamburg (DE); Kasten, Ole, 21680 Stade (DE); Weltjen, Martin, 21726 Oldendorf (DE); Wulf, Mathis, 21680 Stade (DE)
(74) Vertreter: Waller, Stefan

(56) Entgegenhaltungen:
- WO-A1-2010/107766
- GB-A- 2 476 815
- US-A- 5 218 792
- US-B1- 7 000 978

## Beschreibung

Die Erfindung betrifft ein Freizeitfahrzeug mit einem Wohnaufbau nach dem Oberbegriff des Patentanspruchs 1.

Freizeitfahrzeuge mit einem Wohnaufbau sind als Wohnmobile mit eigenem Fahrantrieb und Wohnanhänger bzw. Caravans als Anhänger bekannt.

Wohnmobile wie zum Beispiel WO 2020/212455 und US 5 218 792 A. werden üblicherweise aus einem Triebkopf, der den Motor und die Fahrerkabine eines handelsüblichen Kleinlasters bzw. Transporters umfasst, aufgebaut. Dies geschieht, indem entweder ein Fahrgestell mit dem Rahmen des Herstellers ohne Aufbau hinter der Fahrerkabine verwendet wird, zumeist jedoch ein speziell hierfür gefertigter Rahmen an den Triebkopf angesetzt wird. Auf diese Einheit wird dann der Wohnbereich aufgesetzt. Hierzu werden Wandflächen, beispielsweise Seitenwände oder ein Dach, aus Leichtbaumaterialien, beispielsweise Sandwichplattenkonstruktionen mit einem Isoliermaterial zwischen zwei faserverstärkten Kunststoffschichten, eingesetzt. An einem Laufboden als weitere Wandfläche des Aufbaus, im Regelfall ebenfalls aus einem möglichst leicht gehaltenen Mehrschichtaufbau, werden die Seitenwände angesetzt und mit dem Dach verbunden.

Bei sogenannten vollintegrierten Wohnmobilen wird auch die Karosserie der Fahrerkabine durch einen eigenen Aufbau des Wohnmobilherstellers ersetzt. Beispielsweise werden in diesem Fall die Seitenwände ganz nach vorne verlängert und an die Front eine Frontschürze angesetzt, die eine große Windschutzscheibe aufweist und beispielsweise aus glasfaserverstärkten Kunststoff hergestellt ist.

Wohnanhänger bzw. Caravans werden in gleicher Weise über einem Fahrgestell eines Anhängers aufgebaut.

Zur Verbindung der Seitenwände mit dem Dach, der Seitenwände untereinander sowie der Seitenwände mit dem Laufboden ist es bekannt, in Freizeitfahrzeugen Profile zur Versteifung des Aufbaus einzusetzen. Diese sind üblicherweise mehrteilig an den genannten Verbindungsstellen im Aufbau des Freizeitfahrzeugs befestigt. Die Profile können aus Kunststoff bestehen und diese haben eine L-förmige Form, wobei sie mit jeweils einem Schenkel auf den zu verbindenden Wandflächen aufliegen. Die Befestigung erfolgt partiell über Verschraubung und/oder partielle, nichtstrukturelle, Verklebung.

Diese Profile dienen jedoch nur zur Verbindung der Wandflächen wie beispielsweise der Dachfläche mit einer Seitenwand oder des Laufbodens mit einer Wandfläche. Die Verbindung ist partiell bzw. nur an bestimmten Punkten vorhanden, wenn beispielsweise Schrauben eingesetzt werden. Nachteilig ergibt sich keine besondere Steifigkeit in der Längsrichtung. Auch werden häufig mehrere Elemente hintereinander an einer solchen Verbindungslinie eingesetzt.

Es ist bekannt, dass bei Kofferaufbauten, die auf das Chassis eines Kabinenfahrzeugs gesetzt werden, Profile eine tragende Struktur bilden, wobei die Profile in den Ecklinien der Verbindungen der Wandflächen verlaufen und für die jeweilige anstoßende Wandfläche eine Aufnahmenut aufweisen. In dieser Aufnahmenut wird die Wandfläche eingesetzt. Im Bereich der Freizeitfahrzeuge ist jedoch eine solche Lösung häufig nicht erwünscht, da diese auf der Außenseite sichtbar ist und das optische Erscheinungsbild maßgeblich beeinflusst.

Freizeitfahrzeuge, insbesondere vollintegrierte Wohnmobile, weisen vor allem im Bereich der Dachfläche keine Struktur vergleichbar derjenigen einer Karosserie eines Fahrzeugherstellers auf. Vielmehr werden im Aufbau die Strukturen der vergleichbaren Karosserie eines Transporters vollständig durch eine eigene Konstruktion des Wohnmobilherstellers ersetzt, die weiterhin auch einer anderen Dachlinie folgt. Dadurch existieren keine Strukturen im Holm- und Dachbereich zur Aufnahme von Crashenergie bei einem Frontal- oder Heckaufprall wie etwa durch die Profile einer selbsttragenden Karosserie eines Kleintransporters. Dies gilt auch für den Fall eines Überschlags des Freizeitfahrzeugs. Es ist wünschenswert, eine möglichst hohe Steifigkeit und Aufnahmefähigkeit für Crashenergie zu erreichen.

Aus der DE 196 15 768 A1 ist ein Kantenprofilsystem für Wohnanhänger und Wohnmobile bekannt, bei dem in den Kanten zwischen Wänden bzw. der Wand und dem Dach ein Metallprofil angeordnet ist, bei dem die Wandflächen in Nuten eingesetzt werden. Dieser Stand der Technik weist die bereits genannten unerwünschten Nachteile bezüglich der optischen Erscheinung auf.

Der vorliegenden Erfindung liegt die Aufgabe zugrunde, ein Freizeitfahrzeug mit Wohnaufbau zur Verfügung zu stellen, bei dem zuvor genannten Nachteile vermieden werden und bei Einsatz von Leichtbaumaterialien für die Wandflächen eine große Gesamtfestigkeit des Aufbaus erreicht werden kann und insbesondere Festigkeit in Längsrichtung.

Diese Aufgabe wird durch ein Freizeitfahrzeug mit Wohnaufbau mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Freizeitfahrzeug mit Wohnaufbau, insbesondere Wohnmobil oder Wohnanhänger, mit Wandflächen aus flächigen Plattenelementen und/oder Leichtbaumaterialien wobei an Verbindungen der Wandflächen untereinander Versteifungsprofile auf der Innenseite aufgesetzt und/oder in die Wandfläche eingesetzt sind, die Versteifungsprofile durchgehend in Längsrichtung über ihre Enden Kräfte übertragen können.

Vorteilhaft werden dadurch Kräfte bei einem Frontal- oder Heckaufprall über die Länge des Versteifungsprofils verteilt und in den gesamten Aufbau eingeleitet. Dadurch wird das Risiko verringern, dass es zu einem Aufbrechen der Verbindung zwischen den Wandflächen kommen kann oder einer strukturellen Zerstörung beispielsweise beim Heckaufprall im hinteren Bereich des Aufbaus. Da das Versteifungsprofil in die Wandfläche eingesetzt wird oder auf der Innenseite des Wohnaufbaus auf die Wandfläche aufgesetzt wird, jedoch die Wandfläche nicht umfasst, bleibt die Außengeometrie des Aufbaus von der Versteifungsmaßnahme unbeeinträchtigt. Ganz allgemein können strukturelle Versteifungsprofile, vorzugsweise in Faserverbundwerkstoffen, im Wand-/Dachbereich eingebracht werden, um die Karosserie bzw. den Aufbau auszusteifen.

In einer vorteilhaften Ausgestaltung wird bei einer Anstückelung des Versteifungsprofils durch ein Sekundärprofil, das aufgesetzt wird oder in das die Enden des Versteifungsprofils eingesetzt werden, die Kraftübertragung in Längsrichtung sichergestellt.

Es ist günstig, dass Versteifungsprofil über die gesamte Länge einer Kante zwischen zwei Wandflächen, beispielsweise zwischen Dach und Seitenwand als ein Teil auszuführen. Wenn dennoch eine an Stückelung erfolgen soll, so kann durch ein aufgesteckt Sekundärprofil erreicht werden, dass die Enden der beiden Teile des Versteifungsprofil die Kräfte genauso übertragen können, als wenn es sich um ein einteiliges Bauteil handeln würde.

Vorteilhaft weist das Versteifungsprofil an seinem Ende oder bei einer Anstückelung an der Trennstelle ein aufgesetztes oder angeformtes Endstück auf, das eine Fläche zur Erzielung einer geringeren Querschnittsbelastung zur Übertragung der Längskräfte in eine anschließende Struktur aufweist, insbesondere eine Heckwand, eine Bugmaske oder eine Frontwand des Aufbaus.

Wenn das Versteifungsprofil beispielsweise aus Kunststoff, gegebenenfalls mit Verstärkungen durch Faserverbund, ausgebildet ist, so kann an den Enden ein Endstück angeformt werden, das eine Fläche zur Verteilung der Kraft und Übertragung auf eine anschließende Struktur bereitstellt. Dies kann auch bei Trennstellen innerhalb des Versteifungsprofils vorgesehen werden. Eine solche anschließende Struktur kann eine Heckwand sein, eine Bugmaske eines voll integrierten Wohnmobils, aber auch eine Frontwand, mit der der Übergang von einer Karosserie eines Triebkopfs auf die Breite des Wohnaufbaus erfolgt.

In einer an dem Ende des Versteifungsprofils anschließenden Struktur können mit dem Ende des Versteifungsprofils anschließende Verstärkungsprofile angeordnet sein.

An einem oder beiden Enden können die Versteifungsprofile wenn diese Fahrzeug Längsrichtung angeordnet sind, an der Wohnmobiltypischen Bugmaske und Heckwand bzw. an einer darunter liegenden Versteifungsprofilen befestigt werden, die an den Triebkopf und/oder das Fahrgestell anbinden. Bei mehrteiligen Ausführungen der Bugmaske, Heckwand oder Sicherheitsstruktur werden die Längsträger bzw. Versteifungsprofile am oberen Bereich angebunden.

In einer vorteilhaften Ausgestaltung ist ein Versteifungsprofil zwischen einer seitlichen Wandfläche und einer Dachfläche angeordnet.

Bei einem Fahrzeug mit einer selbsttragenden Karosserie ist die aussteifende Wirkung des Fahrzeugdachs erheblich, wie leicht an den erforderlichen Verstärkungen bei Cabrios zu erkennen ist. Wenn daher beim Aufbau eines Freizeitfahrzeugs bzw. Wohnmobils oder Wohnanhänger die Dachfläche sehr steif und in Längsrichtung Kräfte aufnehmend mit den Seitenwänden verbunden ist und insgesamt ein sehr stabiles, umgedrehtes "U" bildet, ergibt sich eine vergrößerte Sicherheit für den Wohnraum gegen Zerstörung bei einem Unfall. Insbesondere wird die Sicherheit für die Fahrzeuginsassen insbesondere bei Überschlagunfällen verbessert, indem die Verbindung zwischen Dach- und Wandpaneel ausgesteift wird.

Es kann auch ein Versteifungsprofil zwischen einer seitlichen Wandfläche und einem Laufboden angeordnet sein.

Zusammen mit einer eventuell gleichen Ausführung beim Übergang zur Dachfläche ergibt dann der Laufboden zusammen mit den beiden Seitenwänden und der Dachfläche insgesamt ein steifes kastenförmiges Element. Bei entsprechender Ausführung kann das Versteifungsprofil als Positionierhilfe zur vereinfachten Montage dienen. Hierbei kann das Versteifungsprofil jedoch auch nicht durchgängig ausgestaltet werden, sondern Aussparungen für beispielsweise den Radkasten aufweisen. Durch entsprechende Träger unterhalb des Laufbodens oder eine steife Gestaltung des Radkasten kann hier eine Kräfteübertragung sichergestellt werden. In dieser Ausführungsform kann das Versteifungsprofil gleichzeitig als Aufnahme für Verkleidungselemente, wie etwa eine Schürze, und Komponenten dienen, z.B. Stauraumfächer.

Vorteilhaft ist ein vorderes Ende des Versteifungsprofils mit einer B-Säule des Triebkopfs bzw. eines Windlaufs verbunden.

Bei voll integrierten wird der Wohnaufbau auf einen sogenannten Windlauf aufgesetzt, bei dem auch die Fahrerkabine des verwendeten Transporters entfernt wurde und nur die untere tragende Struktur mit Motor und Antriebsaggregaten zum Einsatz kommt. Auch bei einem solchen Windlauf ist jedoch die B Säule im unteren Bereich vorhanden und eignet sich gut zur Anbindung und Kraftübertragung auf das Versteifungsprofil. Gegebenenfalls muss ein Zwischenelement vorgesehen werden, um Differenzen in der Breite auszugleichen.

Die Versteifungsprofile können aus Faserverbundwerkstoffen gebildet sein.

Diese sind sehr leicht und können hohe Kräfte übertragen.

In einer weiteren Ausgestaltung sind an den Versteifungsprofilen Verbindungselemente zur Befestigung von Stehwänden angeordnet.

Solche beispielsweise quer zur Fahrtrichtung gesehenen Seitenwand angeordneten Stehwände führen zu einer zusätzlichen Versteifung des Aufbaus, insbesondere in Bezug auf seitliche Kräfte. Diese Stehwände können in den Möbelaufbau integriert werden.

Die Versteifungsprofile können mit den Wandflächen vollflächig verklebt sein.

Das Versteifungsprofil kann ein Strangprofil und/oder Hohlkammerprofil sein.

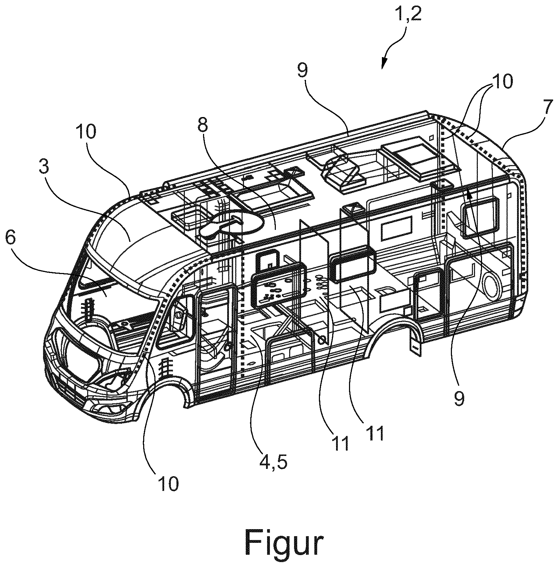

Weitere Vorteile und Einzelheiten der Erfindung werden anhand des in der Figur dargestellten Ausführungsbeispiels näher erläutert.

Die Figur zeigt ein Freizeitfahrzeug 1 in der Ausführungsform als Wohnmobil 2 und hier ein sogenanntes vollintegriertes Wohnmobil 2. Dargestellt ist schematisch der Aufbau über einem Fahrgestell ohne Aggregate, Achsen und Inneneinrichtung. An eine beispielsweise aus glasfaserverstärktem Kunststoff hergestellte Bugmaske 3 schließt sich eine in Fahrtrichtung betrachtet linke Seitenwand 4 als Wandfläche 5 sowie eine entsprechende rechte Seitenwand 6 an, bis zu einer Heckwand 7. An der Oberkante sind die Seitenwände 4,6 mit einer Dachfläche 8 über an der Innenseite angeordnete Versteifungsprofile 9 verbunden, die in der hier dargestellten Ausführungsform sich durchgehend von der Bugmaske 3 bis zu der Heckwand 7 als ein Bauteil erstrecken.

Innerhalb der Bugmaske 3 sind durch die gestrichelte Linie angedeutete Verstärkungsprofile 10 angeordnet, die eine erhöhte Festigkeit als Ersatz für die ursprüngliche A-Säule der Fahrerkabine des zugrunde liegenden Fahrzeugs bieten. Ebenso weist die Heckwand 7 durch gestrichelte Linien angedeutete Verstärkungsprofile 10 auf.

Die Enden der Versteifungsprofile 9 sind über hier nicht dargestellte Endstücke mit den Verstärkungsprofilen 10 in der Bugmaske 3 und der Heckwand 7 verbunden.

Dadurch können bei einem Aufprall, beispielsweise einem Crash in das Heck des Fahrzeugs, Kräfte über die Heckwand 7 mit ihren Verstärkungsprofilen 10 in die Versteifungsprofile 9 eingeleitet werden und über die Fahrzeuglänge auf die Dachfläche 8 sowie die Seitenwände 4,6 verteilt werden. Auch im Falle eines Überschlags ergibt sich eine deutlich höhere Festigkeit.

Quer zur Fahrtrichtung sind an den Seitenwänden 4,6 Stehwände 11 angeordnet, die zu einer zusätzlichen Aussteifung führen, mit den Versteifungsprofilen 9 verbunden sind und in dem hier nicht dargestellten Möbelaufbau integriert werden können. So ist es etwa denkbar, zwischen den hier dargestellten Stehwänden 11 eine Nasszelle anzuordnen.

## Patentansprüche

1. Wohnmobil (2) oder Wohnanhänger mit Wohnaufbau mit Wandflächen (5) aus flächigen Plattenelementen und/oder Leichtbaumaterialien, wobei an Verbindungen der Wandflächen (5) untereinander Versteifungsprofile (9) auf der Innenseite aufgesetzt und/oder in die Wandfläche (5) eingesetzt sind und wobei die Versteifungsprofile (9) durchgehend in Längsrichtung über ihre Enden Kräfte übertragen können,
**dadurch gekennzeichnet,**
**dass** das Versteifungsprofil (9) über die gesamte Länge einer Kante zwischen zwei Wandflächen als ein Teil ausgeführt ist.

2. Wohnmobil oder Wohnanhänger nach Anspruch 1,
**dadurch gekennzeichnet,**
**dass** bei einer Anstückelung des Versteifungsprofils (9) durch ein Sekundärprofil, das aufgesetzt wird und/oder in das die Enden des Versteifungsprofils (9) eingesetzt werden, die Kraftübertragung in Längsrichtung sichergestellt wird.

3. Wohnmobil oder Wohnanhänger nach Anspruch 1 oder 2,
**dadurch gekennzeichnet,**
**dass** das Versteifungsprofil (9) an seinem Ende oder bei einer Anstückelung an der Trennstelle ein aufgesetztes oder angeformtes Endstück aufweist, das eine Fläche zur Erzielung einer geringeren Querschnittsbelastung zur Übertragung der Längskräfte in eine anschließende Struktur aufweist, insbesondere eine Heckwand (7), eine Bugmaske (3) oder eine Frontwand des Aufbaus.

4. Wohnmobil oder Wohnanhänger nach Anspruch 3,
**dadurch gekennzeichnet,**
**dass** in einer an dem Ende des Versteifungsprofil (9) anschließenden Struktur mit dem Ende des Versteifungsprofils (9) anschließende Verstärkungsprofile (10) angeordnet sind.

5. Wohnmobil oder Wohnanhänger nach einem der vorhergehenden Ansprüche,
**dadurch gekennzeichnet,**
**dass** ein Versteifungsprofil (9) zwischen einer seitlichen Wandfläche (4,6) und einer Dachfläche (8) angeordnet ist.

6. Wohnmobil oder Wohnanhänger nach einem der vorhergehenden Ansprüche,
**dadurch gekennzeichnet,**
**dass** ein Versteifungsprofil (9) zwischen einer seitlichen Wandfläche (4,6) und einem Laufboden angeordnet ist.

7. Wohnmobil oder Wohnanhänger nach Anspruch 6,
**dadurch gekennzeichnet,**
**dass** ein vorderes Ende des Versteifungsprofils (9) mit einer B-Säule des Triebkopfs bzw. eines Windlaufs verbunden ist.

8. Wohnmobil oder Wohnanhänger nach einem der vorhergehenden Ansprüche,
**dadurch gekennzeichnet,**
**dass** die Versteifungsprofile (9) aus Faserverbundwerkstoffen gebildet sind.

9. Wohnmobil oder Wohnanhänger nach einem der vorhergehenden Ansprüche,
**dadurch gekennzeichnet,**
**dass** an den Versteifungsprofilen (9) Verbindungselemente zur Befestigung von Stehwänden (11) angeordnet sind.

10. Wohnmobil oder Wohnanhänger nach einem der vorhergehenden Ansprüche,
**dadurch gekennzeichnet,**
**dass** die Versteifungsprofile (9) mit den Wandflächen vollflächig verklebt sind.

11. Wohnmobil oder Wohnanhänger nach einem der vorhergehenden Ansprüche,
**dadurch gekennzeichnet,**
**dass** das Versteifungsprofil (9) ein Strangprofil und/oder Hohlkammerbprofil ist.

## Claims

1. Motorhome (2) or caravan having a living-space superstructure with wall surfaces (5) made of planar panel elements and/or lightweight materials, wherein, at connections between the wall surfaces (5), stiffening profiles (9) are attached to the inner side and/or inserted into the wall surface (5), and wherein the stiffening profiles (9) can continuously transmit forces in the longitudinal direction via their ends,
**characterized**
**in that**, over the entire length of an edge between two wall surfaces, the stiffening profile (9) is designed in the form of a single piece.

2. Motorhome or caravan according to Claim 1,
**characterized**
**in that** the transmission of force in the longitudinal direction is ensured when the stiffening profile (9) is supplemented by a secondary profile, which is attached and/or into which the ends of the stiffening profile (9) are inserted.

3. Motorhome or caravan according to Claim 1 or 2,
**characterized**
**in that**, at its end or - if supplemented by another profile - at the point of separation, the stiffening profile (9) has an endpiece attached to it or formed on it, and the endpiece has a surface for achieving a relatively small amount of cross-sectional loading for transmission of the longitudinal forces into an adjoining structure, in particular a rear wall (7), a front-end mask (3) or a front wall of the superstructure.

4. Motorhome or caravan according to Claim 3,
**characterized**
**in that** a structure adjoining the end of the stiffening profile (9) has arranged in it reinforcing profiles (10), which are connected to the end of the stiffening profile (9).

5. Motorhome or caravan according to one of the preceding claims,
**characterized**
**in that** a stiffening profile (9) is arranged between a lateral wall surface (4, 6) and a roof surface (8).

6. Motorhome or caravan according to one of the preceding claims,
**characterized**
**in that** a stiffening profile (9) is arranged between a lateral wall surface (4, 6) and a floor.

7. Motorhome or caravan according to Claim 6,
**characterized**
**in that** a front end of the stiffening profile (9) is connected to a B-pillar of the driver's cab or a cowl panel.

8. Motorhome or caravan according to one of the preceding claims,
**characterized**
**in that** the stiffening profiles (9) are formed from fibre composites.

9. Motorhome or caravan according to one of the preceding claims,
**characterized**
**in that** connecting elements for fastening upright walls (11) are arranged on the stiffening profiles (9).

10. Motorhome or caravan according to one of the preceding claims,
**characterized**
**in that** the stiffening profiles (9) are adhesively bonded to the wall surfaces over their entire surface area.

11. Motorhome or caravan according to one of the preceding claims,
**characterized**
**in that** the stiffening profile (9) is an extruded profile and/or a hollow-chamber profile.

## Revendications

1. Camping-car (2) ou caravane avec une structure d'habitation avec des surfaces de paroi (5) en éléments de panneaux plats et/ou en matériaux de construction légers, des profilés de renforcement (9) étant rapportés sur le côté intérieur et/ou étant insérés dans la surface de paroi (5) au niveau de liaisons des surfaces de paroi (5) entre elles, et les profilés de renforcement (9) pouvant transmettre des forces en continu dans la direction longitudinale par l'intermédiaire de leurs extrémités,
**caractérisé en ce que**
le profilé de renforcement (9) est réalisé sous la forme d'une pièce sur toute la longueur d'un bord entre deux surfaces de paroi.

2. Camping-car ou caravane selon la revendication 1, **caractérisé en ce que** lors d'un rajout du profilé de renforcement (9), la transmission des forces dans la direction longitudinale est assurée par un profilé secondaire qui est rapporté et/ou dans lequel les extrémités du profilé de renforcement (9) sont insérées.

3. Camping-car ou caravane selon la revendication 1 ou 2, **caractérisé en ce que** le profilé de renforcement (9) présente, à son extrémité ou lors d'un rajout au niveau du point de séparation, un embout rapporté ou moulé qui présente une surface permettant d'obtenir une charge de section transversale réduite pour la transmission des forces longitudinales dans une structure contiguë, notamment une paroi arrière (7), un masque avant (3) ou une paroi frontale de la carrosserie.

4. Camping-car ou caravane selon la revendication 3, **caractérisé en ce que** dans une structure contiguë à l'extrémité du profilé de renforcement (9) sont agencés des profilés de renforcement (10) contigus à l'extrémité du profilé de renforcement (9).

5. Camping-car ou caravane selon l'une quelconque des revendications précédentes, **caractérisé en ce qu'**un profilé de renforcement (9) est agencé entre une surface de paroi latérale (4, 6) et une surface de toit (8).

6. Camping-car ou caravane selon l'une quelconque des revendications précédentes, **caractérisé en ce qu'**un profilé de renforcement (9) est agencé entre une surface de paroi latérale (4, 6) et un plancher.

7. Camping-car ou caravane selon la revendication 6, **caractérisé en ce qu'**une extrémité avant du profilé de renforcement (9) est reliée à une colonne B du véhicule moteur ou d'une glace de pare-brise.

8. Camping-car ou caravane selon l'une quelconque des revendications précédentes, **caractérisé en ce que** les profilés de renforcement (9) sont formés de matériaux composites fibreux.

9. Camping-car ou caravane selon l'une quelconque des revendications précédentes, **caractérisé en ce que** des éléments de liaison pour la fixation de parois verticales (11) sont agencés sur les profilés de renforcement (9).

10. Camping-car ou caravane selon l'une quelconque des revendications précédentes, **caractérisé en ce que** les profilés de renforcement (9) sont collés sur toute la surface avec les surfaces des parois.

11. Camping-car ou caravane selon l'une quelconque des revendications précédentes, **caractérisé en ce que** le profilé de renforcement (9) est un profilé extrudé et/ou un profilé à chambre creuse.
